# FASCICULE DE BREVET EUROPEEN

(11) **EP 1 004 802 B1**
(45) Date de publication et mention de la délivrance du brevet: **21.03.2007**
(21) Numéro de dépôt: 99402888.4
(22) Date de dépôt: 22.11.1999
(51) Int. Cl.: F16K 31/08, F23N 1/00

(54) **Dispositif d'étanchéité du moteur pas à pas de commande d'admission du gaz au brûleur d'un chauffe-bains ou d'une chaudière, et procédé pour la réalisation du dispositif**
Vorrichtung zum Abdichten des Gaszufuhr-Schrittmotors eines Brenners für Baderhitzer oder Heizkessel und Verfahren zur Herstellung der Vorrichtung
Device for sealing the gas supply stepping motor of a burner for bath-heater or boiler and process for producing the device

(30) Priorité: 23.11.1998 FR 9814704
(43) Date de publication de la demande: 31.05.2000
(73) Titulaire: SAUNIER DUVAL EAU CHAUDE CHAUFFAGE S.D.E.C.C. - Société anonyme, F-94120 Fontenay sous Bois (FR)
(72) Inventeur: Benabdelkarim, Mohammed, 44000 Nantes (FR)
(74) Mandataire: Lhuillier, René

(56) Documents cités:
- EP-A- 0 318 380
- US-A- 3 747 892

## Description

L'invention se rapporte à un chauffe-bains ou une chaudière à gaz et concerne plus précisément un dispositif d'étanchéité associé au moteur pas à pas qui commande l'admission du gaz au brûleur, et un procédé pour la réalisation du dispositif.

Dans les appareils modernes de ce type, on cherche à disposer d'organes d'asservissement du gaz admis au brûleur qui réagissent avec précision aux ordres reçus des dispositifs électroniques de contrôle et de régulation.

Il a été imaginé de substituer à une électrovanne classique, qui présente généralement des courbes d'hystérésis assez larges au détriment de la précision de la puissance fournie au brûleur, - un moteur pas à pas pour manoeuvrer le clapet de régulation du mécanisme gaz de l'appareil comme décrit dans la demande de brevet français N° 98 07339 au nom de la Demanderesse.

Ce moteur pas à pas actionne donc un clapet par l'intermédiaire d'une tige traversant un bouchon. Cette traversée est nécessairement étanche, généralement à l'aide d'un joint torique, et les frottements entre la tige et le joint présentent à l'usage un certain nombre d'inconvénients. Ainsi, hormis le fait que ce frottement peut à la longue détériorer le joint et ensuite générer une fuite de gaz, il faut pour vaincre ce frottement, augmenter la puissance du moteur et donc sa consommation électrique et son coût.

Un dispositif selon le préambule est décrit en EP-A- 0 937 928.

L'invention apporte une solution intéressante à ce problème en proposant un dispositif d'étanchéité statique sur le moteur pas à pas, c'est-à-dire un dispositif dans lequel il n'y a pas de pièce en mouvement entre les deux milieux gaz et air, par opposition aux dispositifs d'étanchéité dynamique faisant partie de l'art antérieur connu.

L'invention a donc pour objet un dispositif d'étanchéité du moteur pas à pas de commande d'admission du gaz au brûleur d'un chauffe-bains ou d'une chaudière dans lequel le rotor du moteur pas à pas, coiffé par une chemise étanche formant un capot est en prise directe avec la tige de manoeuvre du clapet de régulation à ouverture progressive qui met en communication une chambre d'admission gaz et un conduit de départ vers le brûleur, dispositif selon lequel le rotor et le stator dudit moteur, pas à pas sont montés sur une même bride en forme de T dont l'extrémité inférieure sert de siège au clapet de régulation et dont la partie centrale est creusée d'un puits vertical et d'un guide de diamètre différent traversé par la tige.

Selon une autre caractéristique particulière de l'invention, le procédé pour la réalisation du dispositif consiste à percer le puits central de la bride et le guide de la tige traversante, en une seule opération.

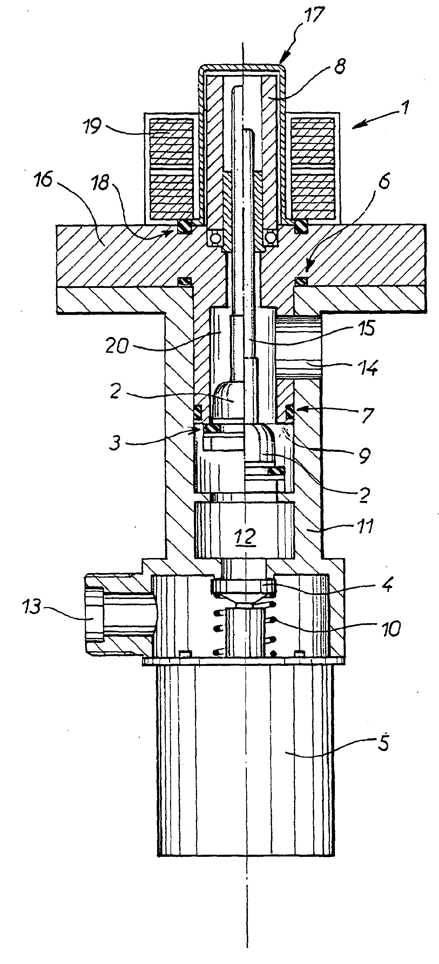

D'autres caractéristiques et avantages de l'invention apparaîtront à la lecture de la description suivants d'un exemple de réalisation en référence à la figura unique qui est une vue schématique en coupe du mécanisme gaz dans laquelle le clapet de régulation est montré en position fermée en partie gauche de la figure et en position ouverte en partie droite.

On a représenté sur la figure un corps de valve 11 dont la chambre intérieure 12 est alimentée en gaz par un conduit 13 sous réserve de l'ouverture d'un clapet de sécurité 4 manoeuvré par une électrovanne de sécurité 5 à l'encontre de la force de rappel d'un ressort 10. Le gaz de la chambre 12 est admis à un conduit de sortie 14 vers un brûleur non représenté lors de l'ouverture d'un clapet de régulation 2 à ouverture progressive. Celui-ci est monté en bout d'une tige 15 actionnée par un moteur pas à pas 1. La bride 16 du moteur 1 est une pièce en forme de T qui ferme la chambre d'admission gaz 12. Sa partie centrale pénètre dans le chambre 12, et l'extrémité de cette partie centrale forme une couronne 9 qui sert de siège au clapet 2. La partie centrale est creusée d'un puits vertical 20 traversé par la tige 15. L'étanchéité du clapet sur son siège est assurée par une garniture 3. L'étanchéité entre la bride 16 et la chambre 12 est assurée par un joint torique 7 en partie basse et par un joint 6 en partie haute.

Le rotor 8 du moteur 1 en prise directe avec la tige 15 est logé à l'intérieur d'une chemise étanche 17 en forme de capot cylindrique, dont la base est fixée, de façon également étanche par un joint torique 18, au-dessus de la partie centrale de la bride. Le stator 19 du moteur trouve sa place autour de la chemise étanche, qui assure l'étanchéité entre l'air extérieur et le gaz de la chambre 12. En effet ce gaz peut s'établir le long de la tige et au niveau du rotor, puisque la tige coulisse sans frottement et sans joint dans le puits central 20. On a ainsi une étanchéité statique, c'est-à-dire sans frottement, du moteur pas à pas, qui élimine ainsi les problèmes d'hystérésis mécanique. Ce mode de réalisation présente également l'avantage que la bride 16 sert aussi de siège au clapet 2, et que le perçage de son puits central ainsi que du guide de la tige traversante 15 sont réalisés en une seule opération. Ainsi on obtient une coaxialité parfaite entre ces deux ouvertures.

A la partie gauche de la figure, le clapet 2 est montré en position fermée.

Dès qu'il y a une demande d'allumage du brûleur, l'électrovanne 5 ouvre le clapet de sécurité 4, et le rotor 8 du moteur pas à pas 1 déplace la tige 15 dans le sens de l'ouverture du clapet 2 comme le montre la partie droite de la figure. Ce clapet qui est solidaire de la tige 15 du moteur 1 ne peut pas se coincer ni frotter sur son siège du fait de la coaxialité rigoureuse obtenue par construction comme indiqué plus haut. C'est un avantage important pour la durée de vie du moteur, car on minimise ainsi les contraintes radiales sur le roulement du moteur.

## Revendications

1. Dispositif d'étanchéité du moteur pas à pas de commande d'admission du gaz au brûleur d'un chauffe bains ou d'une chaudière, dans lequel le rotor (8) du moteur pas à pas (1), coiffé par une chemise étanche (17) formant un capot, est en prise directe avec la tige (15) de manoeuvre du clapet de régulation (2) à ouverture progressive qui met en communication une chambre d'admission gaz (12) et un conduit (14) de départ vers le brûleur, **caractérisé en ce que** le rotor (8) et le stator (19) dudit moteur pas à pas sont montés sur une même bride (16) ayant une section en forme de T dont l'extrémité inférieure sert de siège au clapet de régulation (2), et dont la partie centrale est creusée d'un puits (20) et coaxialement d'un guide de diamètre inférieur traversé par la tige (15).

2. Dispositif d'étanchéité selon la revendication 1, **caractérisé en ce que** le capot est une chemise cylindrique (17) fixée de façon étanche à sa base, grâce à un joint torique (18), au-dessus de la partie centrale de la bride (16).

3. Dispositif d'étanchéité selon la revendication 1, **caractérisé en ce que** la partie centrale de la bride (16) pénètre dans la chambre d'admission gaz (12), l'extrémité de cette partie centrale formant une couronne (9) qui sert de siège au clapet de régulation (2).

4. Procédé pour la réalisation du dispositif selon la revendication 1, **caractérisé en ce qu'**il consiste à percer le puits central (20) de la bride (16) et le guide de la tige traversante (15), en une seule opération.

## Claims

1. A device for sealing the gas supply stepping motor of a burner for a water heater or boiler, wherein the rotor (8) of the stepping motor (1), covered by a sealing jacket (17) forming a hood, is arranged to act directly on the control stem (15) of a progressively opening regulating valve (2) which puts a gas admission chamber (12) into communication with an exit duct (14) towards the burner, **characterised in that** the rotor (8) and the stator (19) of said stepping motor are mounted on the same flange (16), having a T-shaped section, the lower end of which serves as a seat for the regulating valve (2), and the central part of which has a hollow bore (20) and a coaxial guide of lesser diameter traversed by the stem (15).

2. A sealing device according to claim 1, **characterised in that** the hood is a cylindrical jacket (17) fixed in a sealing manner at its base, by means of a toroidal joint (18), above the central part of the flange (16).

3. A sealing device according to claim 1, **characterised in that** the central part of the flange (16) extends into the gas admission chamber (12), the end of this central part forming a ring (9) which serves as the seat for the regulating valve (2).

4. A method of making the device according to claim 1, **characterised in that** it consists of making the central bore (20) of the flange (16) and the guide for the traversing stem (15), in a single operation.

## Patentansprüche

1. Abdichtungsvorrichtung des Gaszufuhrsteuerungs-Schrittmotors eines Badeofen- oder Heizkesselbrenners, bei der der Rotor (8) des Schrittmotors (1), versehen mit einer eine Haube (17) bildenden dichten Abdeckung, direkt auf der Betätigungsstange (15) des Regelventils (2) mit progressiver Öffnung sitzt, das die Verbindung zwischen einer Gaseinlasskammer (12) und einer Brennerzuführungsleitung (14) herstellt,
**dadurch gekennzeichnet, dass** der Rotor (8) und der Stator (19) des genannten Schrittmotors auf denselben, einen T-förmigen Querschnitt aufweisenden Flansch (16) montiert sind, dessen unteres Ende dem Regelventil (2) als Sitz dient und dessen zentraler Teil eine Bohrung (20) sowie eine koaxiale Bohrung kleineren Durchmessers für den Durchgang der Stange (15) umfasst.

2. Abdichtungsvorrichtung nach Anspruch 1, **dadurch gekennzeichnet, dass** die Haube eine zylindrische Abdeckung (17) ist, deren Basis dank einer O-Ringdichtung (18) auf dichte Weise auf dem zentralen Teil des Flansches (16) befestigt ist.

3. Abdichtungsvorrichtung nach Anspruch 1, **dadurch gekennzeichnet, dass** der zentrale Teil des Flansches (16) in die Gaseinlasskammer (12) eindringt, wobei das Ende dieses zentralen Teils einen Ring (9) bildet, der dem Regelventil (2) als Sitz dient.

4. Verfahren zur Realisierung der Vorrichtung nach Anspruch 1, **dadurch gekennzeichnet, dass** es darin besteht, in dem Flansch (16) die Zentralbohrung (20) und die Durchgangsbohrung für die Stange (15) in einem einzigen Arbeitsgang herzustellen.
